# EUROPÄISCHE PATENTSCHRIFT

(11) **EP 2 576 650 B1**
(45) Veröffentlichungstag und Bekanntmachung des Hinweises auf die Patenterteilung: **14.05.2014**
(21) Anmeldenummer: 11720469.3
(22) Anmeldetag: 18.05.2011
(51) Int. Cl.: C08G 18/34, C08G 18/79, B29B 17/00, C08G 73/10, C08L 19/00

(54) **WERKSTOFFE, VERFAHREN ZU IHRER HERSTELLUNG UND KOMPONENTEN DAFÜR**
MATERIALS, PROCESS FOR PRODUCTION THEREOF AND COMPONENTS THEREFOR
MATÉRIAUX, LEUR PROCÉDÉ DE FABRICATION ET LEURS COMPOSANTS

(30) Priorität: 27.05.2010 EP 10164021
(43) Veröffentlichungstag der Anmeldung: 10.04.2013
(73) Patentinhaber: BASF SE, 67056 Ludwigshafen (DE)
(72) Erfinder: CRISTADORO, Anna, 64646 Heppenheim (DE); BRUCHMANN, Bernd, 67251 Freinsheim (DE); THOME, Anna, CH-8246 Langwiesen (CH); WIDLER, Juergen, 78247 Hilzingen (DE)
(86) Internationale Anmeldenummer: PCT/EP2011/058032
(87) Internationale Veröffentlichungsnummer: WO 2011/147723

(56) Entgegenhaltungen:
- EP-A2- 0 286 966
- WO-A1-99/00453
- WO-A2-2007/047073
- GB-A- 1 227 446
- US-A- 4 177 333

## Beschreibung

Die vorliegende Erfindung betrifft Werkstoffe, enthaltend
(A) mindestens einen Kautschuk,
(B) mindestens ein Polyimid, gewählt aus verzweigten Kondensationsprodukten von
   (a) mindestens einem Polyisocyanat mit im Mittel mehr als zwei Isocyanatgruppen pro Molekül und
   (b) mindestens einer Polycarbonsäure mit mindestens 3 COOH-Gruppen pro Molekül oder ihrem Anhydrid, und
(C) gegebenenfalls mindestens ein Polyurethan,

Weiterhin betrifft die vorliegende Erfindung ein Verfahren zur Herstellung von erfindungsgemäßen Werkstoffen. Weiterhin betrifft die vorliegende Erfindung Polyimide, die als Komponente für erfindungsgemäße Werkstoffe besonders geeignet sind, und ein Verfahren zur Herstellung von erfindungsgemäßen Polyimiden. Weiterhin betrifft die vorliegende Erfindung die Verwendung von erfindungsgemäßen Polyimiden.

Natürliche und insbesondere synthetische Kautschuke werden heutzutage in vielen Anwendungen eingesetzt, und zwar vorzugsweise als Gummipartikel. Ein wichtiges Anwendungsgebiet ist hierbei die Herstellung von vorgefertigten Elastikmatten oder Formteilen sowie von in situ eingebauten Elastikschichten mit Hilfe von Gummigranulaten unterschiedlicher Größe. Dabei werden wahlweise unterschiedliche Arten von Neugummi oder Recyclinggranulate eingesetzt, wobei letztere durch das Recycling von Autoreifen oder durch die Verwertung technischer Gummiabfälle gewonnen werden. In der Regel werden die Gummigranulate im weiteren mit einer definierten Menge an Polyurethan als Bindemittel vermischt und entweder in Formen gepresst, oder in situ, also vor Ort, als Schicht auf einer mehr oder weniger ebenen Oberfläche aufgebracht. Im Fall der Herstellung vorgefertigter Matten oder Formteile können den Granulaten vor oder nach der Mischung mit dem Bindemittel, kleine Mengen Wasser und/oder Katalysatoren zugesetzt werden, wobei es sich bei den Katalysatoren üblicherweise um tertiäre Amine oder Metallkomplexverbindungen bzw. Metallsalze handelt. Die Aushärtung erfolgt schließlich durch Reaktion des Polyurethans mit der entweder zugegebenen geringen Wassermenge (im Falle von Formteilen) oder aber mit den Wasseranteilen aus der Luftfeuchtigkeit beim in situ-Einbau. Es entstehen hierbei in jedem Falle elastische Verbundmaterialien. Werden die Verbundmaterialien als Zylinderware vorgefertigt, werden diese mit speziellen Maschinen zu Elastikmatten mit genau definierter Dicke zurechtgeschnitten.

Derartige vorgefertigte oder in situ gefertigte Elastikmatten oder Schichten werden zum Beispiel als Schutzlagen, Dämmschichten, rutschhemmende Matten und Böden, als elastische Sportböden im Innen- oder Außenbereich sowie als Fallschutz für Kinderspielplätze und als Elastikschicht unter Kunstrasen eingesetzt.

Je nach Art und Herkunft der eingesetzten Gummigranulate variieren die mechanischen Eigenschaften von vorgefertigten, aber auch von in situ-eingebauten Verbundmaterialien sehr stark. Besonders ausgeprägt sind diese Unterschiede bei Recyclingware und insbesondere bei Recyclinggummigranulaten, da diese in der Regel eine äußerst heterogene Zusammensetzung aufweisen. So können bspw. allein in der Lauffläche eines Fahrzeugreifens, insbesondere eines LKW-Reifens, bis zu zwanzig verschiedene Gummiarten enthalten sein. Demzufolge enthält man sehr stark schwankende Eigenschaften, die Anlass dazu geben, zur Qualitätssicherung eine kalkulierte Mindestmenge an PUR-Bindemittel zu verwenden. Bestimmte Recyclinggranulate sind grundsätzlich nicht für bestimmte Anwendungsgebiete wie zum Beispiel Leichtathletiklaufbahnen geeignet, da wichtige Anforderungen gängiger Normen hinsichtlich der Zugfestigkeit und Dehnung damit nicht eingehalten werden können.

Die Haftung von Kautschuken mit anderen Materialien ist in vielen Fällen gut. Dennoch können die Anforderungen an die Haftung bestimmter Materialkombinationen in anspruchsvollen Anwendungen nicht immer erreicht werden. Daher ist eine Verbesserung der Haftung von Kautschuken mit anderen Materialien zur Herstellung von Verbundmaterialien in vielen Fällen wünschenswert.

Bekannte Verfahren zur Verbesserung der Haftung umfassen die chemische und/oder physikalische Vorbehandlung einer oder beider miteinander zu verbindender Grenzflächen. Hierzu zählen Korona-Behandlung, Beflammung, Plasmabehandlung, UV-Bestrahlung, Sputtern, Ätzen, weiterhin elektrochemische Verfahren, wie Anodisierung oder mechanische Aufrauprozesse. Daneben werden in Kombination oder getrennt auch Primer bzw. Haftvermittler auf eine oder beide Grenzflächen aufgetragen, die selbst keine chemische oder morphologische Änderung der Substratoberflächen bewirken, jedoch als Haftvermittler wirken.

So offenbart EP 0 286 966 die Plasmabehandlung einer Gummioberfläche zur Verbesserung der Haftung mit einem Polyurethanschaumstoff. Die Verwendung einer Haftvermittlerschicht zur Verbesserung der Haftung zwischen Polyurethan und Metall ist beispielsweise in EP 1 516 720 beschrieben.

Der Nachteil der bekannten Verfahren besteht darin, dass solche Prozesse häufig zusätzliche Produktionsschritte darstellen und zu erhöhtem Zeit- und Kostenaufwand führen. Daneben kann der Umgang mit lösungsmittelhaltigen und/oder aggressiven Substanzen zu Belastungen für den Menschen und die Umwelt führen.

Es ist jedoch in vielen Fällen wünschenswert, die Haftung von Kautschuken mit anderen Materialien selbst nach chemischer und/oder physikalischer Vorbehandlung noch zu verbessern.

In WO 2007/141171 sind Polyurethane beschrieben, die durch ein hyperverzweigtes Polymer an andere fein verteilte Feststoffe gebunden werden. Geeignete hyperverzweigte Polymere sind insbesondere gewählt aus Polyethern, Polyaminen, Polyestern, Polycarbonaten, Polyamiden, Polyurethanen und Polyharnstoffen sowie den Mischformen Polyetheraminen, Polyesteramiden, Polyamidoaminen, Polyestercarbonaten und Polyharnstoffurethanen.

WO 2007 047073 beschreibt mit Polyurethanprepolymeren gebundenen Kautschukgranulate für Sportböden und Matten.

In US 4 177 333 werden Polyimiden veröffentlicht, hergestellt aus Polyisocyanaten mit 2,3 NCO Gruppen und Tetracarbonsäuredianhydriden.

Insbesondere die Anbindung von Polyurethanen an Kautschuke ist jedoch noch zu verbessern. Außerdem ist das vorstehend beschriebene Verfahren recht umständlich. Es bestand also die Aufgabe, Werkstoffe bereit zu stellen, bei denen eine besonders starke Anbindung von Kautschuk an Polyurethan bzw. umgekehrt bewerkstelligt werden kann.

Demgemäß wurden die eingangs definierten Werkstoffe gefunden. Erfindungsgemäße Werkstoffe enthalten
(A) mindestens einen Kautschuk, auch Kautschuk (A) genannt,
(B) mindestens ein Polyimid, auch Polyimid (B) genannt, gewählt aus verzweigten Kondensationsprodukten von
   (a) mindestens einem Polyisocyanat mit im Mittel mehr als zwei Isocyanatgruppen pro Molekül, kurz Polyisocyanat (a) genannt, und
   (b) mindestens einer Polycarbonsäure mit mindestens 3 COOH-Gruppen pro Molekül, kurz Polycarbonsäure (b) genannt, oder ihrem Anhydrid, kurz Anhydrid (b) genannt, und
(C) gegebenenfalls mindestens ein Polyurethan, auch Polyurethan (C) genannt,

Erfindungsgemäße Werkstoffe enthalten mindestens einen Kautschuk (A). Im Rahmen der vorliegenden Erfindung kann Kautschuk (A) aus beliebigen Elastomeren einschließlich thermoplastischen Elastomeren gewählt werden. Geeignete Elastomere sind beispielsweise Butadien-Kautschuk (BR), Styrol-Butadien-Kautschuk (SBR), Isopren-Kautschuk (IR), Styrol-Isopren-Butadien-Kautschuk (SIBR), Acrylnitril-Butadien-Kautschuk (NBR), Chloropren-Kautschuk (CR), Isobuten-Isopren-Kautschuk (IIR), Naturkautschuk (NR) oder Ethylen-Propylen-Dien-Kautschuk (EPDM), bevorzugt Styrol-Butadien-Kautschuk oder Ethylen-Propylen-Dien-Kautschuk, rein oder in Blends oder als vulkanisierte Gummimischungen, eingesetzt werden. Dabei sind unter vulkanisierten Gummimischungen Abmischungen reiner Elastomere oder Elastomerblends oder Mischungen aus Elastomeren und Thermoplasten zu verstehen, die mit Vulkanisationsbeschleunigern und/oder Vernetzern auf Schwefel oder Peroxidbasis vermischt und gemäß gängiger Praxis vulkanisiert sind. Elastomere enthalten dabei gegebenenfalls handelsübliche Füllstoffe, wie Ruß, Kieselgel, Kreide, Metalloxide, Weichmacher und Antioxidationsmittel und/oder Ozonschutzmittel. Als thermoplastische Elastomere kön-nen beispielsweise thermoplastisches Polyurethan (TPU), Styrol-Butadien-Styrol (SBS), Styrol-Isopren-Stryol (SIS) oder vergleichbare Polymere gewählt werden.

Erfindungsgemäße Werkstoffe enthalten außerdem mindestens ein Polyimid (B), welches verzweigt ist und gewählt wird aus Kondensationsprodukten von
(a) mindestens einem Polyisocyanat mit im Mittel mehr als zwei Isocyanatgruppen pro Molekül und
(b) mindestens einer Polycarbonsäure mit mindestens 3 COOH-Gruppen pro Molekül oder ihrem Anhydrid.

Polyimid (B) kann ein Molekulargewicht M_{w} im Bereich von 1.000 bis 200.000 g/mol aufweisen, bevorzugt sind mindestens 2.000 g/mol.

Polyimid (B) kann mindestens zwei Imidgruppen pro Molekül aufweisen, bevorzugt sind mindestens 3 Imidgruppen pro Molekül.

In einer Ausführungsform der vorliegenden Erfindung kann Polyimid (B) bis zu 1.000 Imidgruppen pro Molekül aufweisen, bevorzugt bis zu 660 pro Molekül.

In einer Ausführungsform der vorliegenden Erfindung bezeichnet die Angabe der Isocyanatgruppen bzw. der COOH-Gruppen pro Molekül jeweils den Mittelwert (Zahlenmittel).

Polyimid (B) kann aus strukturell und molekular einheitlichen Molekülen zusammengesetzt sein. Bevorzugt jedoch ist, wenn Polyimid (B) eine Mischung von molekular und strukturell unterschiedlichen Molekülen ist, beispielsweise sichtbar an der Polydispersität M_{w}/Mₙ von mindestens 1,4, bevorzugt M_{w}/Mₙ von 1,4 bis 50, bevorzugt 1,5 bis 10. Die Polydispersität kann man nach bekannten Methoden bestimmen, insbesondere durch Gelpermeationschromatographie (GPC). Geeigneter Standard ist beispielsweise Polymethylmethacrylat (PMMA).

In einer Ausführungsform der vorliegenden Erfindung weist Polyimid (B) neben Imidgruppen, die das Polymergerüst bilden, end- oder seitenständig weiterhin mindestens drei, bevorzugt mindestens sechs, mehr bevorzugt mindestens zehn end- oder seitenständige funktionelle Gruppen auf. Bei funktionellen Gruppen in Polyimid (B) handelt es sich vorzugsweise um Anhydrid- oder Säuregruppen und/oder freie oder verkappte NCO-Gruppen. Polyimide (B) weisen vorzugsweise nicht mehr als 500 end- oder seitenständige funktionelle Gruppen auf, bevorzugt nicht mehr als 100.

Alkylgruppen wie beispielsweise Methylgruppen sind also keine Verzweigung eines Moleküls Polyimid (B).

Polyisocyanat (a) kann man aus beliebigen Polyisocyanaten wählen, die im Mittel mehr als zwei Isocyanatgruppen pro Molekül aufweisen, die verkappt oder vorzugsweise frei vorliegen können. Bevorzugt sind trimere oder oligomere Diisocyanate, beispielsweise oligomeres Hexamethylendiisocyanat, oligomeres Isophorondiisocyanat, oligomeres Toluylendiisocyanat, oligomeres Diphenylmethandiisocyanat - so genanntes Polymer-MDI - und Mischungen der vorstehend genannten Polyisocyanate. Beispielsweise liegt sogenanntes trimeres Hexamethylendiisocyanat in vielen Fällen nicht als reines trimeres Diisocyanat vor, sondern als Polyisocyanat mit einer mittleren Funktionalität von 3,6 bis 4 NCO-Gruppen pro Molekül. Analoges gilt für oligomeres Tetramethylendiisocyanat und oligomeres Isophorondiisocyanat.

In einer Ausführungsform der vorliegenden Erfindung handelt es sich bei Polyisocyanat mit mehr als zwei Isocyanatgruppen pro Molekül um eine Mischung aus mindestens einem Diisocyanat und mindestens einem Triisocyanat oder einem Polyisocyanat mit mindestens 4 Isocyanatgruppen pro Molekül.

In einer Ausführungsform der vorliegenden Erfindung hat Polyisocyanat (a) im Mittel mindestens 2,2, bevorzugt mindestens 2,5, besonders bevorzugt mindestens 3,0 Isocyanatgruppen pro Molekül.

In einer Ausführungsform der vorliegenden Erfindung hat Polyisocyanat (a) im Mittel bis zu 8, bevorzugt bis zu 6 Isocyanat-Gruppen pro Molekül.

In einer Ausführungsform der vorliegenden Erfindung wählt man Polyisocyanat (a) aus oligomerem Hexamethylendiisocyanat, oligomerem Isophorondiisocyanat, oligomerem Diphenylmethandiisocyanat und Mischungen der vorstehend genannten Polyisocyanate.

Polyisocyanat (a) kann neben Urethangruppen auch eine oder mehrere andere funktionelle Gruppen aufweisen, beispielsweise Harnstoff-, Allophanat-, Biuret-, Carbodiimid-, Amid-, Ester, Ether-, Uretonimin-, Uretdion-, Isocyanurat- oder Oxazolidingruppen.

Als Polycarbonsäuren (b) werden aliphatische oder vorzugsweise aromatische Polycarbonsäuren gewählt, die mindestens drei COOH-Gruppen pro Molekül aufweisen, oder die betreffenden Anhydride, vorzugsweise wenn sie in niedermolekularer, also nicht polymerer Form vorliegen. Auch solche Polycarbonsäuren mit drei COOH-Gruppen sind mit umfasst, bei denen zwei Carbonsäuregruppen als Anhydrid vorliegen und die dritte als freie Carbonsäure.

In einer bevorzugten Ausführungsform der vorliegenden Erfindung wählt man als Polycarbonsäure (b) eine Polycarbonsäure mit mindestens 4 COOH-Gruppen pro Molekül oder das betreffende Anhydrid.

Beispiele für Polycarbonsäuren (b) und ihre Anhydride sind 1,2,3-Benzoltricarbonsäure und 1,2,3-Benzoltricarbonsäuredianhydrid, 1,3,5-Benzoltricarbonsäure (Trimesinsäure), bevorzugt 1,2,4-Benzoltricarbonsäure (Trimellitsäure), Trimellitsäureanhydrid und insbesondere 1,2,4,5-Benzoltetracarbonsäure (Pyromellitsäure) und 1,2,4,5-Benzoltetracarbonsäuredianhydrid (Pyromellitsäuredianhydrid), 3,3',4,4"-Benzophenontetracarbonsäure, 3,3',4,4"-Benzophenontetracarbonsäuredianhydrid, weiterhin Benzolhexacarbonsäure (Mellitsäure) und Anhydride der Mellitsäure.

Weiterhin geeignet sind Mellophansäure und Mellophansäureanhydrid, 1,2,3,4-Benzoltetracarbonsäure und 1,2,3,4-Benzoltetracarbonsäuredianhydrid, , 3,3,4,4-Biphenyltetracarbonsäure und 3,3,4,4-Biphenyltetracarbonsäuredianhydrid, 2,2,3,3-Biphenyltetracarbonsäure und 2,2,3,3-Biphenyltetracarbonsäuredianhydrid, 1,4,5,8-Naphthalintetracarbonsäure und 1,4,5,8-Naphthalintetracarbonsäuredianhydrid, 1,2,4,5-Naphthalintetracarbonsäure und 1,2,4,5-Naphthalintetracarbonsäuredianhydrid, 2,3,6,7-Naphthalintetracarbonsäure und 2,3,6,7-Naphthalintetracarbonsäuredianhydrid, 1,4,5,8-Decahydronaphthalintetracarbonsäure und 1,4,5,8-Decahydronaphthalintetracarbonsäuredianhydrid, 4,8-dimethyl-1,2,3,5,6,7-hexahydronaphthalin-1,2,5,6-tetracarbonsäure und 4,8-dimethyl-1,2,3,5,6,7-hexahydronaphthalin 1,2,5,6-tetracarbonsäuredianhydrid, 2,6-Dichloronaphthalin-1,4,5,8-tetracarbonsäure und 2,6-Dichloronaphthalin-1,4,5,8-tetracarbonsäuredianhydrid, 2,7-Dichloronaphthalin-1,4,5,8-tetracarbonsäure und 2,7-Dichloronaphthalin-1,4,5,8-tetracarbonsäuredianhydrid, 2,3,6,7-Tetrachloronaphthalin-1,4,5,8-tetracarbonsäure und 2,3,6,7-Tetrachloronaphthalin-1,4,5,8-tetracarbonsäuredianhydrid, 1,3,9,10-Phenanthrentetracarbonsäure und 1,3,9,10-Phenanthrentetracarbonsäuredianhydrid, 3,4,9,10 Perylentetracarbonsäure und 3,4,9,10 Perylentetracarbonsäuredianhydrid, Bis(2,3-dicarboxyphenyl)methan und Bis(2,3-dicarboxyphenyl)methandianhydrid, Bis(3,4-dicarboxyphenyl)methan und Bis(3,4-dicarboxyphenyl)methandianhydrid, 1,1-Bis(2,3-dicarboxyphenyl)ethan und 1,1-Bis(2,3-dicarboxyphenyl)ethandianhydrid, 1,1-Bis(3,4-dicarboxyphenyl)ethan und 1,1-Bis(3,4-dicarboxyphenyl)ethandianhydrid, 2,2-Bis(2,3-dicarboxyphenyl)propan und 2,2-Bis(2,3-dicarboxyphenyl)propandianhydrid, 2,3-Bis(3,4-dicarboxyphenyl)propan und 2,3-Bis(3,4-dicarboxyphenyl)propandianhydrid, Bis-(3,4-carboxyphenyl)sulfon und Bis(3,4-carboxyphenyl)-sulfondianhydrid, Bis(3,4-carboxyphenyl)ether und Bis(3,4-carboxyphenyl)etherdianhydrid, Ethylentetracarbonsäure und Ethylentetracarbonsäuredianhydrid, 1,2,3,4-Butantetracarbonsäure und 1,2,3,4-Butantetracarbonsäuredianhydrid, 1,2,3,4-Cyclopentantetracarbonsäure und 1,2,3,4,-Cyclopentantracarbonsäuredianhydrid, 2,3,4,5-Pyrrolidintetracarbonsäure und 2,3,4,5-Pyrrolidintetracarbonsäuredianhydrid, 2,3,5,6-Pyrazintetracarbonsäure und 2,3,5,6-Pyrazintetracarbonsäuredianhydrid, 2,3,4,5-Thiophentetracarbonsäure und 2,3,4,5-Thiophentetracarbonsäuredianhydrid.

In einer Ausführungsform der vorliegenden Erfindung setzt man Anhydride aus US 2,155,687 oder US 3,277,117 zur Synthese von Polyimid (B) ein.

Lässt man Polyisocyanat (a) und Polycarbonsäure (b) - vorzugsweise in Gegenwart eines Katalysators - miteinander kondensieren, so wird unter Abspaltung von CO₂ und H₂O eine Imidgruppe gebildet. Setzt man statt Polycarbonsäure (b) das entsprechende Anhydrid ein, so wird unter Abspaltung von CO₂ eine Imidgruppe gebildet.

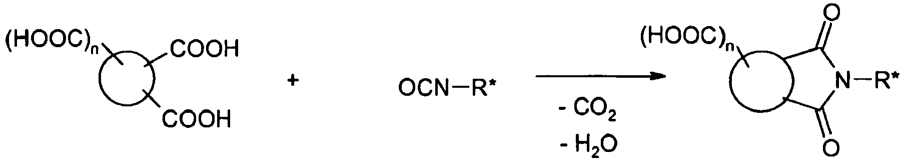

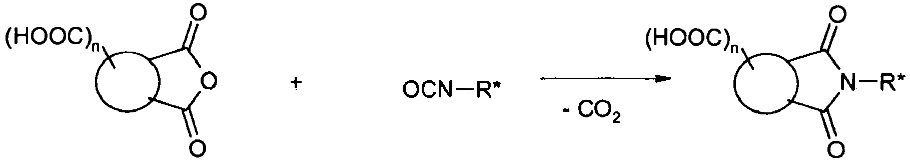

Dabei steht R* für den in der obigen Reaktionsgleichung nicht weiter zu spezifizierenden Rest von Polyisocyanat (a), und n ist eine Zahl größer oder gleich 1, beispielsweise 1 im Falle einer Tricarbonsäure oder 2 im Falle einer Tetracarbonsäure, wobei (HOOC)ₙ durch eine Anhydridgruppe der Formel C(=O)-O-C(=O) ersetzt sein kann.

In einer Ausführungsform der vorliegenden Erfindung setzt man Polyisocyanat (a) in Mischung mit mindestens einem Diisocyanat ein, beispielsweise mit Toluylendiisocyanat, Hexamethylendiisocyanat oder mit Isophorondiisocyanat. In einer besonderen Variante setzt man Polyisocyanat (a) im Gemisch mit dem korrespondierenden Diisocyanat ein, beispielsweise trimeres HDI mit Hexamethylendiisocyanat oder trimeres Iso-phorondiisocyanat mit Isophorondiisocyanat oder polymeres Diphenylmethandiisocyanat (Polymer MDI) mit Diphenylmethandiisocyanat.

In einer Ausführungsform der vorliegenden Erfindung setzt man Polycarbonsäure (b) in Mischung mit mindestens einer Dicarbonsäure oder mit mindestens einer Dicarbonsäureanhydrid ein, beispielsweise mit Phthalsäure oder Phthalsäureanhydrid.

In einer Ausführungsform der vorliegenden Erfindung kann erfindungsgemäßer Werkstoff weiterhin (C) mindestens ein Polyurethan enthalten, im Rahmen der vorliegenden Erfindung auch Polyurethan (C) genannt.

Im Rahmen der vorliegenden Erfindung können Polyurethane (C) aus beliebigen Polyurethanen gewählt werden. Polyurethane (C) können eine Dichte im Bereich von 10 g/l bis 1200 g/l aufweisen und schaumförmige und kompakte Systeme umfassen.

Unter Polyurethanen (C) sind im Rahmen der vorliegenden Erfindung nicht nur solche Polymere zu verstehen, die ausschließlich durch Urethangruppen verknüpft sind, sondern in einem allgemeinen Sinne Polymere, die durch Umsetzung von Di- oder Polyisocyanaten mit Diolen und mit anderen Verbindungen erhalten werden können, die mindestens zwei aktive Wasserstoffatome pro Molekül enthalten. Polyurethane (C) können also neben Urethangruppen beispielsweise Harnstoff-, Allophanat-, Biuret-, Carbodiimid-, Amid-, Ester, Ether-, Uretonimin-, Uretdion-, Isocyanurat- oder Oxazolidingruppen enthalten.

In einer Ausführungsform der vorliegenden Erfindung enthält Polyurethan (C) zu mindestens 50 Gew.-%, vorzugsweise zu mindestens 80 Gew.-% und insbesondere zu mindestens 95 Gew.-% ein Isocyanatgruppen aufweisendes Präpolymer, im Folgenden als Isocyanatprepolymer bezeichnet.

In einer Ausführungsform der vorliegenden Erfindung enthält Polyurethan (C) im Mittel mindestens zwei Isocyanatgruppen pro Molekül, bevorzugt sind im Mittel 2 bis 3 Isocyanatgruppen pro Molekül.

Die Viskosität von Polyurethan (C) liegt vorzugsweise in einem Bereich von 500 bis 10.000 mPa·s, besonders bevorzugt von 1.000 bis 5.000 mPa·s, gemessen bei 25 °C nach DIN 53 018.

Die Herstellung von Polyurethan (C) kann dabei durch Umsetzen von Di- und Polyisocyanaten mit gegenüber Isocyanaten reaktiven Verbindungen, Kettenverlängerungs- und / oder Vernetzungsmitteln erfolgen, wobei Polyisocyanat im Überschuss eingesetzt wird.

Di- und Polyisocyanate kann man wählen aus aliphatischen, cycloaliphatischen und aromatischen zwei- oder mehrwertigen Di- und Polyisocyanaten sowie beliebigen Mischungen daraus. Bevorzugt sind 4,4', 2,4' und 2,2'-Diphenylmethandiisocyanat, insbesondere Mischungen von 2,4'-Diphenylmethandiisocyanat und 4,4'-Diphenylmethandiisocyanat, Mischungen aus monomeren Diphenylmethandiisocyanaten und höherkemigen Homologen des Diphenylmethandiisocyanats (Polymer-MDI), Tetramethylendiisocyanat, Hexamethylendiisocyanat (HDI), Isophorondiisocyanat (IPDI), 1,4-Phenylendiisocyanat, 1,5-Naphthalindiisocyanat (NDI), 2,4,6-Toluoltriisocyanat und 2,4- und 2,6-Tolyulendiisocyanat (TDI), oder Mischungen daraus.

Ganz besonders bevorzugt werden 2,4-Tolyulendiisocyanat, 2,6-Tolyulendiisocyanat, 2,4'-Diphenylmethandiisocyanat und 4,4'-Diphenylmethandiisocyanat und höherkemige Homologe des Diphenylmethandiisocyanats (Polymer-MDI) sowie Gemische der vorstehend genannten Di- bzw. Polyisocyanate, frei oder beispielsweise geblockt als Uretonimin, insbesondere eine Mischung aus 2,4'-Diphenylmethandiisocyanat und 4,4'-Diphenylmethandiisocyanat als Polyisocyanat gewählt.

In einer Ausführungsform der vorliegenden Erfindung sind in Polyurethan (C) Mischungen von zwei oder mehr Diisocyanaten eingebaut, beispielsweise mindestens zwei aromatische oder mindestens zwei aliphatische Diisocyanate oder mindestens ein aliphatisches und mindestens ein cyloaliphatisches Diisocyanat oder mindestens ein aromatisches und mindestens ein aliphatisches Diisocyanat oder mindestens ein aromatisches und mindestens ein cycloaliphatisches Diisocyanat.

Als gegenüber Isocyanaten reaktive Verbindungen können alle Verbindungen mit zumindest zwei aktiven Wasserstoffatomen, d. h. zwei gegenüber Isocyanatgruppen reaktiven Wasserstoffatomen, eingesetzt werden. Geeignete Verbindungen, die mindestens zwei aktive Wasserstoffatome pro Molekül enthalten, sind Aminoalkohole, Thioglykole, Diamine und insbesondere niedermolekulare und polymere Diole.

Als niedermolekulare Diole, im Rahmen der vorliegenden Erfindung solche mit einem Molekulargewicht bis 500 g/mol, sind beispielhaft zu nennen: 2-Ethandiol, 1,2-Propandiol, 1,3-Propandiol, 1,2-Butandiol, 1,3-Butandiol, 1,4-Butandiol, 1,4-But-2-endiol, 1,4-But-2-indiol, 1,5-Pentandiol und seine Stellungsisomeren, 1,6-Hexandiol, 1,8-Oktandiol, 1,4-Bishydroxymethylcyclohexan, 2,2-bis-(4-hydroxycyclohexyl)propan, 2-Methyl-1,3-propandiol, Diethylenglykol, Triethylenglykol, Tetraethylenglykol und insbesondere 2,2-Dimethylpropan-1,3-diol (Neopentylglykol).

Als polymere Diole sind zwei- oder mehrwertige Polyesterpolyole und Polyetherpolyole zu nennen, wobei die zweiwertigen bevorzugt sind. Als Polyetherpolyole kommen vorzugsweise Polyetherdiole in Betracht, wie sie zum Beispiel durch Bortrifluorid katalysierte Verknüpfung von Ethylenoxid, Propylenoxid, Butylenoxid, Tetrahydrofuran, Styroloxid oder Epichlorhydrin mit sich selbst oder untereinander oder durch Anlagerung dieser Verbindungen, einzeln oder im Gemisch, an Starterkomponenten mit reaktionsfähigen Wasserstoffatomen wie Wasser, mehrwertige Alkohole oder Amine wie 1,2-Ethandiol, Propandiol-(1,3), 1,2- oder 2,2-Bis-(4-hydroxyphenyl)propan oder Anilin erhältlich sind, in Betracht. Weiterhin sind Polyether-1,3-Diole, zum Beispiel das an einer OH-Gruppe alkoxylierte Trimethylolpropan, dessen Alkylenoxidkette mit einem 1 bis 18 C-Atome enthaltenden Alkylrest abgeschlossen ist, vorzugsweise eingesetzte polymer Diole.

Bevorzugte polymere Diole sind: Polyethylenglykol, Polypropylenglykol und Polytetrahydrofuran (Poly-THF).

Besonders bevorzugt werden Polyetherpolyole gewählt aus: Polyethylenglykol mit einem mittleren Molekulargewicht (Mₙ) im Bereich von 500 bis 9.000 g/mol, bevorzugt im Bereich von 500 bis 6.000 g/mol, Poly-1,2-propylenglykol oder Poly-1,3-propandiol mit einem mittleren Molekulargewicht (Mₙ) im Bereich von 500 bis 6.000, bevorzugt 600 bis 4.000 g/mol, Poly-THF mit einem mittleren Molekulargewicht (Mₙ) im Bereich von ober-halb 500 bis 5.000, bevorzugt von 600 bis 3.000 g/mol, besonders bevorzugt im Bereich von 750 bis 2.500 g/mol.

Andere bevorzugte polymere Diole sind Polyesterpolyole (Polyesterdiole) und Polycarbonatdiole.

In einer Ausführungsform der vorliegenden Erfindung ist Polyurethan (C) durch Reaktion von Di- oder Polyisocyanat mit di-, tri- oder höherfunktionellen Polyetherpolyolen, insbesondere mit solchen, die eine oder mehrere tertiäre Aminogruppen aufweisen, aufgebaut.

Polyetherpolyole, die tertiäre Aminogruppen aufweisen, können beispielsweise durch Reaktion von sekundären Aminen wie beispielsweise Ethylendiamin mit Alkylenoxiden, beispielsweise Ethylenoxid oder Propylenoxid, erhalten werden.

Bevorzugte Polyetherpolyole, besonders bevorzugt Polyoxypropylen- oder Polyoxypropylen-Polyoxyethylen-Polyole, besitzen eine Funktionalität von 2 bis 5, besonders bevorzugt von 2 bis 3 und Molekulargewichte M_{w} im Bereich von 400 bis 9.000, vorzugsweise 1.000 bis 6.000, besonders bevorzugt 1.500 bis 5.000 und insbesondere von 2.000 bis 4.000 g/mol. Ganz besonders bevorzugtes Polyetherpolyol ist Polypropylenglykol mit einem gewichtsmittleren Molekulargewicht im Bereich von 1.500 bis 2.500 g/mol.

Vorzugsweise ist der Gehalt an freien, monomeren Diisocyanaten mit einem Molekulargewicht < 249 g/mol in Polyurethan (C) kleiner als 1 Gew.-%, besonders bevorzugt kleiner als 0,5 Gew.-% und insbesondere kleiner als 0,1 Gew.-%, bezogen auf das Gesamtgewicht des Polyurethans (C). Dies gilt insbesondere dann, wenn man Polyurethan (C) unter Verwendung von Toluylendiisocyanat hergestellt hat.

Vorzugsweise handelt es sich bei Polyurethan (C) um aromatisches Polyurethan, das heißt, mindestens 50 mol-% des eingebauten Diisocyanats sind aromatische Diisocyanat(e).

In einer Ausführungsform der vorliegenden Erfindung enthält erfindungsgemäßer Werkstoff
im Bereich von 70 bis 97 Gew.-% Kautschuk (A), bevorzugt 80 bis 88 Gew.-%,
im Bereich von 0,5 bis 5 Gew.-% Polyimid (B), bevorzugt 3 bis 3,5 Gew.-%,
im Bereich von null bis 25 Gew.-% Polyurethan (C), bevorzugt 3 bis 20 Gew.-%.

in einer Ausführungsform der vorliegenden Erfindung kann erfindungsgemäßer Werkstoff mindestens einen Zusatz (D) enthalten, beispielsweise organische oder anorganische Füllstoffe, wie
- silikatische Mineralien, beispielsweise Talkum, Schichtsilikate wie Antigorit, Serpentin, insbesondere Chrysotil, weiterhin Amphibole, insbesondere Hornblenden;
- Metalloxide wie Kaolin, Aluminiumoxide, Titanoxide und Eisenoxide,
- andere Metallsalze, beispielsweise Carbonate, Sulfate und Sulfide, insbesondere Kreide, Schwerspat, Cadmiumsulfid und Zinksulfid, sowie
- Glaspartikel einschließlich Glasfasern in verschiedenen Abmessungen,
weiterhin Antioxidantien und Ozonschutzmittel oder Weichmacher und ein oder mehrere thermoplastische organische Polymere, wie Ethylenvinylacetat (EVA), Polyethylen, Polypropylen, Polycarbonat, thermoplastisches Polyurethan (TPU), Polyvinylchlorid (PVC) oder vorzugsweise styrolhaltige Thermoplaste, beispielsweise Polystyrol oder Polystyrolacrylnitril (SAN), oder thermoplastische Elastomere auf Basis von Styrol-Butadien-Styrol-Blockcopolymeren oder Styrol-Isopren-Styrol-Blockcopolymeren oder Blends aus den vorstehend genannten Thermoplasten untereinander.

Vorzugsweise als Zusatz (D) verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern gleicher oder verschiedener Länge, die gegebenenfalls geschlichtet sein können.

Als organische Füllstoffe kommen beispielsweise in Betracht: Ruß, Melamin, Kollophonium, Cyclopentadienylharze und Pfropfcopolymerisate, weiterhin Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

In einer Ausführungsform der vorliegenden Erfindung kann erfindungsgemäßer Werkstoff insgesamt im Bereich von 0,1 bis 50 Gew.-%, bezogen auf die Summe von Kautschuk (A) und Polyimid (B) und gegebenenfalls Polyurethan (C), an Zusatz oder Zusätzen (D) enthalten.

Erfindungsgemäße Werkstoffe eignen sich besonders als oder zur Herstellung von Schuhsohlen, Reifen, Laminat, Polsterungen, Autositzen, und bevorzugt zur Herstellung von Sporthallenböden und Spielplätzen, beispielsweise als Böden (englisch shock pads) und insbesondere Laufbahnen, beispielsweise als Zwischenschicht oder Unterbau. Ein weiterer Gegenstand der vorliegenden Erfindung ist die Verwendung von erfindungsgemäßen Werkstoffen als oder zur Herstellung von Schuhsohlen, Reifen, Laminat, Polsterungen, Autositzen. Ein weiterer Gegenstand der vorliegenden Erfindung sind Schuhsohlen, Reifen, Laminat, Polsterungen, Autositze, enthaltend mindestens einen erfindungsgemäßen Werkstoff. Erfindungsgemäße Schuhsohlen, Reifen, Laminat, Polsterungen, Autositze und Sporthallenböden und Spielplätzen und insbesondere Laufbahnen, beispielsweise als Zwischenschicht oder Unterbau, zeichnen sich durch sehr gute mechanische Eigenschaften aus, insbesondere bezüglich Zugfestigkeit und Dehnung.

Ein weiterer Gegenstand der vorliegenden Erfindung ist ein Verfahren zur Herstellung von erfindungsgemäßen Werkstoffen, auch erfindungsgemäßes Herstellverfahren genannt. Zur Durchführung des erfindungsgemäßen Herstellverfahrens vermischt man
(A) mindestens einen Kautschuk,
(B) mindestens ein Polyimid, gewählt aus verzweigten Kondensationsprodukten von
   (a) mindestens einem Polyisocyanat mit im Mittel mehr als zwei Isocyanatgruppen pro Molekül und
   (b) mindestens einer Polycarbonsäure mit mindestens 3 COOH-Gruppen pro Molekül oder ihrem Anhydrid, und
(C) gegebenenfalls mindestens ein Polyurethan
miteinander.

Vorzugsweise weist Polyimid (B) eine Polydispersität M_{w}/Mₙ von mindestens 1,4 auf.

Polyurethan (C), Kautschuk (A) und Polyimid (B) sind vorstehend beschrieben.

Polyurethan (C) kann man, bezogen auf die gesamte Mischung von Kautschuk (A) mit Polyimid (B), in einer Menge von bis zu 25 Gew.% und insbesondere 3 bis 20 Gew.-% einsetzen.

In einer Ausführungsform der vorliegenden Erfindung setzt man Kautschuk (A) als Granulat ein. Granulatförmiger Kautschuk (A) kann beliebige Größe und Form aufweisen. Bevorzugt verwendet werden elastische Granulate aus Gummi- oder Kunststoffabfällen. Der mittlere Korndurchmesser von Granulat-förmigem Kautschuk (A) kann bis maximal 60 mm betragen, vorzugsweise von 0,05 bis 50 mm, und besonders bevorzugt von 1 bis 4 mm, wobei auch bimodale und multimodale Mischungen in Frage kommen. Die genannten Kautschuk-Abfälle entstehen zum Beispiel beim Recycling von Autoreifen, bei der Reifenrunderneuerung und bei der Fertigung technischer Gummi- oder Kunststoffartikel. Abfälle aus dem Recycling von Autoreifen werden bevorzugt eingesetzt.

In einer anderen Ausführungsform der vorliegenden Erfindung setzt man Kautschuk (A) als Fasern ein.

In einer Ausführungsform des erfindungsgemäßen Herstellverfahrens geht man so vor, dass man Polyimid (B) auf einem Körper, der Kautschuk (A) und gegebenenfalls Polyurethan (C) aufweist, aufträgt, so dass oder wobei sich ein Film von Polyimid (B) bildet. Danach bringt man weiteren Kautschuk (A) bzw. Polyurethan (C) auf und stellt einen mechanischen Kontakt her. Vorzugsweise kann man anpressen.

In einer Ausführungsform der vorliegenden Erfindung kann man Polyimid (B) in situ auf Kautschuk (A) oder ggf. Polyurethan (C) bilden.

In einer speziellen Ausführungsform des erfindungsgemäßen Herstellungsverfahrens kann man so vorgehen, dass man Polyurethan (C) in Mengen von bis 25 Gew.-%, vorzugsweise 3 bis 10 Gew.-Teilen, bezogen auf die Summe aus Kautschuk (A) und Polyimid (B), mit Kautschuk (A) und Polyimid (B) gegebenenfalls unter Zugabe von mindestens einem der vorstehend genannten Zusätze (D) vermischt, beispielsweise in einem Zwangsmischer. Die so erhaltene Mischung wird anschließend ausgehärtet.

Die Aushärtung der erhaltenen Mischung kann durch Zugabe gegenüber Isocyanat reaktiver Verbindungen und/oder Kettenverlängerungs- oder Vernetzungsmittel erfolgen, im Rahmen der vorliegenden Erfindung auch Zweischrittverfahren genannt.

In einer Ausführungsform der vorliegenden Erfindung vermischt man Kautschuk (A) zunächst mit einem Zusatz (D), insbesondere einem Zusatz, der mindestens eine Verbindung enthält, die mindestens eine, bevorzugt mindestens zwei verschiedene oder vorzugsweise gleiche funktionelle Gruppen aufweist, die mit Isocyanat reagieren kann. Geeignete Verbindungen sind primäre Diamine, primäre Alkanolamine, beispielsweise Ethanolamin, sekundäre Dialkanolamine, beispielsweise N,N-Diethanolamin, und insbesondere Diole, beispielsweise Ethylenglykol, Diethylenglykol, Propylenglykol, Dipropylenglykol, Neopentylglykol oder 1,4-Butandiol. Ganz besonders geeignet sind polymere Diole, die von Ethylenglykol oder Propylenglykol abgeleitet sind und die ein Molekulargewicht M_{w} im Bereich von 1000 bis 5000 g/mol aufweisen können.

In einer Ausführungsform der vorliegenden Erfindung ist vorstehend beschriebener Zusatz mit mindestens einer Säure vermischt, beispielsweise mit Schwefelsäure oder insbesondere mit Phosphorsäure.

Ein solcher Zusatz kann die Aushärtung einer Mischung von Kautschuk (A) und Polyimid (B) und gegebenenfalls Polyurethan (C) erheblich verbessern, beispielsweise beschleunigen oder zu härteren Produkten führen.

Die Aushärtung der wie vorstehend beschrieben erhaltenen Mischung kann man durch Zumischen von in der Polyurethan-Chemie gebräuchlichen Katalysatoren, z.B. tertiären Aminen, und/oder organischen Metallverbindungen z.B. beschleunigen. Als Katalysatoren werden beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin verwendet. Ebenso kommen als Katalysatoren Metallverbindungen in Betracht, vorzugsweise Zinnverbindungen wie Zinn-(II)-salze von organischen Carbonsäuren, z.B. Zinn-(II)-acetat, Zinn-(II)-octoat, Zinn-(II)-ethylhexoat und Zinn-(II)-laurat und bevorzugt OrganoZinnverbindungen, insbesondere die Dialkylzinn-(IV)-salze von organischen Carbonsäuren, z.B. Di-n-butyl-zinndiacetat, Di-n-butylzinndilaurat, Di-n-butylzinn-maleat und Di-n-octylzinn-diacetat, sowie Bismutcarboxylate, wie Bismut(III)-neodecanoat, Bismut-2-etyhlhexanoat und Bismut-octanoat oder Mischungen davon. Metallverbindungen bzw. Organometallverbindungen können allein oder in Kombination mit basischen Aminen eingesetzt werden.

Als bevorzugter Katalysator wird Di-n-butylzinnmercaptid eingesetzt.

Der Zeitpunkt der Katalysatorzugabe ist dabei nicht kritisch. So kann der Katalysator beispielsweise bereits im Polyurethan (C) enthalten sein oder wird bei dem Vermischen mit Kautschuk (A) zugegeben.

Vorzugsweise gibt man 0,001 bis 5 Gew.-%, insbesondere 0,05 bis 2 Gew.-% Katalysator bzw. Katalysatorkombination, bezogen auf das Gewicht der gegenüber Isocyanat reaktiven Komponenten, und gegebenenfalls eines Kettenverlängerungs - und/oder Zusatz (D) zu.

Kautschuk (A) kann einen Korndurchmesser von ≤ 60 mm, vorzugsweise von 1 bis 4 mm aufweisen und/oder in einer Menge von 70 bis 97 Gew.-%, bezogen auf Gesamtzusammensetzung der Mischung zugesetzt werden. Dabei kann der Korndurchmesser einheitlich sein oder aber breit verteilt sein.

Polyurethan (C) kann man - bezogen auf die Gesamtzusammensetzung der Mischung - in einer Menge von null bis 25 Gew.-% und insbesondere 3 bis 20 Gew.% eingesetzt werden.

Die vorstehend beschriebene Aushärtung sollte in einer bevorzugten Ausführungsvariante auf dem Untergrund durchgeführt werden, auf dem erfindungsgemäße Werkstoffe eingesetzt werden sollen, also auf dem Untergrund des betreffenden Spielplatzes, der betreffenden Laufbahn oder einen Sporthallenboden.

Ein weiterer Gegenstand der vorliegenden Erfindung sind Polyimide mit einer Polydispersität M_{w}/Mₙ von mindestens 1,4, gewählt aus verzweigten Kondensationsprodukten von
(a) mindestens einem Polyisocyanat mit im Mittel mehr als zwei Isocyanatgruppen pro Molekül, kurz Polyisocyanat (a) genannt, und
(b) mindestens einer Polycarbonsäure mit mindestens 3 COOH-Gruppen pro Molekül, kurz Polycarbonsäure (b) genannt, oder ihrem Anhydrid, kurz Anhydrid (b) genannt.
Kautschuk (A), Polyisocyanat (a), Polycarbonsäure (b), Anhydrid (b) und Polyurethan (C) sind vorstehend beschrieben.

In einer Ausführungsform der vorliegenden Erfindung wählt man Polyisocyanat (a) aus oligomerem Hexamethylendiisocyanat, oligomerem Tetramethylendiisocyanat, oligomerem Isophorondiisocyanat, oligomerem Diphenylmethandiisocyanat, oligomerem Toluylendiisocyanat und Mischungen der vorstehend genannten Polyisocyanaten.

In einer Ausführungsform der vorliegenden Erfindung wählt als Polycarbonsäure (b) eine Polycarbonsäure mit mindestens 4 COOH-Gruppen pro Molekül oder das betreffende Anhydrid.

Erfindungsgemäßes Polyimid (B) kann ein Molekulargewicht M_{w} im Bereich von 1.000 bis 200.000 g/mol aufweisen, bevorzugt sind mindestens 2.000 g/mol.

Erfindungsgemäßes Polyimid (B) kann mindestens zwei Imidgruppen pro Molekül aufweisen, bevorzugt sind mindestens 3 Imidgruppen pro Molekül.

Erfindungsgemäßes Polyimid (B) liegt als Mischung von molekular und strukturell unterschiedlichen Molekülen vor, beispielsweise sichtbar an der Polydispersität M_{w}/Mₙ von mindestens 1,4, bevorzugt M_{w}/Mₙ von 1,4 bis 50, bevorzugt 1,5 bis 10.

In einer Ausführungsform der vorliegenden Erfindung weist erfindungsgemäßes Polyimid (B) neben Imidgruppen, die das Polymergerüst bilden, end- oder seitenständig weiterhin mindestens drei, bevorzugt mindestens sechs, mehr bevorzugt mindestens zehn funktionelle Gruppen auf. Bei end- oder seitenständigen funktionellen Gruppen in erfindungsgemäßem Polyimid (B) handelt es sich vorzugsweise um Anhydrid- oder Säuregruppen und/oder freie oder verkappte NCO-Gruppen. Erfindungsgemäße Polyimide (B) weisen vorzugsweise nicht mehr als 500 end- oder seitenständige funktionelle Gruppen auf, bevorzugt nicht mehr als 100.

Alkylgruppen wie beispielsweise Methylgruppen sind also keine Verzweigung eines erfindungsgemäßen Polyimids (B).

In einer Ausführungsform der vorliegenden Erfindung handelt es sich bei erfindungsgemäßem Polyimid (B) um hyperverzweigtes Polyimid. Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, geteilt durch die Summe der mittlere Anzahl von dendritischen, linearen und terminalen Verknüpfungen, multipliziert mit 100, 10 bis 99,9 %, bevorzugt 20 bis 99 %, besonders bevorzugt 20 bis 95 % beträgt. Unter "Dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Erfindungsgemäße Polyimide (B) sind zur Herstellung von erfindungsgemäßen Werkstoffen besonders geeignet.

Ein weiterer Gegenstand der vorliegenden Erfindung ist ein Verfahren zur Herstellung von erfindungsgemäßen Polyimiden, kurz auch erfindungsgemäßes Syntheseverfahren genannt. Das erfindungsgemäße Syntheseverfahren ist dadurch gekennzeichnet, dass man
(a) mindestens ein Polyisocyanat mit im Mittel mehr als zwei Isocyanatgruppen pro Molekül und
(b) mindestens eine Polycarbonsäure mit mindestens 3 COOH-Gruppen pro Molekül oder ihr Anhydrid
in Gegenwart eines Katalysators miteinander umsetzt.

Als Katalysatoren sind insbesondere Wasser und Brønsted-Basen geeignet, beispielsweise Alkalimetallalkoholate, insbesondere Alkanolate von Natrium oder Kalium, beispielsweise Natriummethanolat, Natriumethanolat, Natriumphenolat, Kaliummethanolat, Kaliumethanolat, Kaliumphenolat, Lithiummethanolat, Lithiumethanolat und Lithiumphenolat,.

Zur Durchführung des erfindungsgemäßen Syntheseverfahrens kann man Polyisocyanat (a) und Polycarbonsäure (b) bzw. Anhydrid (b) in einem Mengenverhältnis einsetzen, dass der molare Anteil von NCO-Gruppen zu COOH-Gruppen im Bereich von 1 : 3 bis 3 : 1 liegt, bevorzugt sind 1 : 2 bis 2 : 1. Dabei zählt eine Anhydridgruppe der Formel CO-O-CO wie zwei COOH-Gruppen.

In einer Ausführungsform der vorliegenden Erfindung kann man im Bereich von 0,005 bis 0,1 Gew.-% Katalysator einsetzen, bezogen auf Summe aus Polyisocyanat (a) und Polycarbonsäure (b) bzw. Polyisocyanat (a) und Anhydrid (b). Bevorzugt sind 0,01 bis 0,05 Gew.-% Katalysator.

In einer Ausführungsform der vorliegenden Erfindung kann man das erfindungsgemäße Syntheseverfahren bei Temperaturen im Bereich von 50 bis 200°C durchführen, bevorzugt sind 50 bis 140°C, besonderes bevorzugt sind 50 bis 100°C.

In einer Ausführungsform der vorliegenden Erfindung kann man das erfindungsgemäße Syntheseverfahren bei Normaldruck durchführen. Aber auch die Synthese unter Druck, beispielsweise bei Drücken im Bereich von 1,1 bis 10 bar, ist möglich.

In einer Ausführungsform der der vorliegenden Erfindung kann man das erfindungsgemäße Syntheseverfahren in Gegenwart eines Lösungsmittels oder Lösungsmittelgemisches durchführen. Beispiele für geeignete Lösungsmittel sind N-Methylpyrrolidon, N-Ethylpyrrolidon, Dimethylformamid, Dimethylacetamid, Dimethylsulfoxid, Dimethylsulphone, Xylol, Phenol, Kresol, Ketone wie beispielsweise Aceton, Methylethylketon (MEK), Methylisobutylketon (MIBK), Acetophenon, weiterhin Mono- und Dichlorbenzol, Ethylenglykolmonoethyletheracetat, und Mischungen von zwei oder mehr der vorstehend genannten Mischungen. Dabei können das oder die Lösungsmittel während der gesamten Dauer der Synthese oder nur während eines Teils der Synthese anwesend sein.

Man kann beispielsweise über einen Zeitraum von 10 Minuten bis 24 Stunden umsetzen.

In einer bevorzugten Ausführungsform der vorliegenden Erfindung führt man das erfindungsgemäße Syntheseverfahren unter Inertgas durch, beispielsweise unter Argon oder unter Stickstoff.

Wenn man wasserempfindliche Bronsted-Base als Katalysator verwendet, so ist es bevorzugt, Inertgas und Lösungsmittel zu trocknen. Wenn man Wasser als Katalysator verwendet, so kann man auf die Trocknung von Lösungsmittel und Inertgas verzichten.

In einer Variante des erfindungsgemäßen Syntheseverfahrens kann man NCO-Endgruppen von erfindungsgemäßem Polyimid (B) mit sekundärem Amin (c) blocken, beispielsweise mit Dimethylamin, Di-n-butylamin oder mit Diethylamin.

Die Erfindung wird durch Arbeitsbeispiele verdeutlicht.

### Arbeitsbeispiele

### Allgemeine Anmerkungen:

Polyisocyanat (a.1): polymeres 4,4'-Diphenylmethandiisocyanat ("Polymer-MDI"), 2,7 Isocyanatgruppen pro Molekül, Viskosität: 195 mPa·s bei 25°C, kommerziell erhältlich als Lupranat® M20 W

"Polyisocyanat (a.2): Isocyanurat von Hexamethylendiisocyanat, im Mittel 3,6 Isocyanatgruppen pro Molekül, kommerziell erhältlich als Basonat® HI

Anhydrid (b.1): 1,2,4,5-Benzoltetracarbonsäuredianhydrid

Sekundäres Amin (c.1): n-Butylamin

Die Molekulargewichte wurden durch Gelpermeationschromatographie (GPC mit einem Refraktometer als Detektor) bestimmt. Als Standard diente Polymethylmethacrylat (PMMA). Als Lösungsmittel diente N,N-Dimethylacetamid (DMAc), wenn nicht ausdrücklich anders angegeben.

Der NCO-Gehalt wurde titrimetrisch nach DIN EN ISO 11 909 bestimmt und in Gew.-% angegeben.

Die Synthesen wurden unter Stickstoff durchgeführt, wenn nicht anders beschrieben. Wenn man Natriummethanolat als Katalysator verwendete, so wurde trockener Stickstoff gewählt.

### Synthesebeispiele:

I. Herstellung von erfindungsgemäßen Polyimiden (B)
I.1 Synthese von erfindungsgemäßem Polyimid (B.1)

In einem 4-I-Vierhalskolben mit Tropftrichter, Rückflusskühler, Innenthermometer und Teflon-Rührer legte man 100 g Anhydrid (b.1) (0,46 mol), gelöst in 1400 ml Aceton, vor und gab 0,1 g Wasser zu. Dann gab man bei 20°C tropfenweise 400 g (1,19 mol) Polyisocyanat (a.1) zu. Man erwärmte unter Rühren auf 55°C. Man rührte weitere sechs Stunden unter Rückfluss bei 55°C. Von einem Aliquot bestimmte man das Molekulargewicht und den NCO-Gehalt.
Mₙ = 3300 g/mol, M_{w}= 4820 g/mol
M_{w}/Mₙ = 1,5
NCO = 27,8%

Man verdünnte durch Zugabe von 350 g einer 1:1-Mischung aus 2,4'-Diphenylmethandiisocyanat und 4,4'-Diphenylmethandiisocyanat. Anschließend destillierte man über einen Zeitraum von einer Stunde das Aceton bei Normaldruck ab. Gegen Ende der Destillation wurde der Rückstand bei 70°C und 200 mbar mit Stickstoff gestrippt. Man erhielt erfindungsgemäßes Polyimid (B.1).

### Analytische Daten:

Mₙ = 2.380 g/mol, M_{w} = 3.000 g/mol, M_{w}/Mₙ = 1,3
NCO: 29,4%

### 1.2 Synthese von erfindungsgemäßem Polyimid (B.2)

In einem 1-I-Vierhalskolben mit Tropftrichter, Rückflusskühler, Innenthermometer und Teflon-Rührer legte man 33 g Anhydrid (b.1) (0,15 mol), gelöst in 467 g Aceton, vor und gab 0,05 g Wasser zu. Dann gab man bei 20°C tropfenweise 50 g (0,075 mol) Polyisocyanat (a.2) zu. Man erwärmte unter Rühren auf 55°C und rührte sechs Stunden unter Rückfluss bei 55°C. Anschließend kühlte man auf Zimmertemperatur ab. Man erhielt erfindungsgemäßes Polyimid (B.2).

### 1.3 Synthese von erfindungsgemäßem Polyimid (B.3)

In einem 2-I-Vierhalskolben mit Tropftrichter, Rückflusskühler, Innenthermometer und Teflon-Rührer legte man 100 g Anhydrid (b.1) (0,46 mol), gelöst in 300 g N-Methylpyrrolidon (NMP), vor und gab 0,1 g Wasser zu. Man erwärmte unter Rühren auf 80°C. Dann gab man bei 80°C über einen Zeitraum von sechs Stunden tropfenweise 142 g (0,22 mol) Polyisocyanat (a.2) zu. Man rührte weitere zehn Stunden bei 80°C. Anschließend kühlte man auf Zimmertemperatur ab. Man erhielt erfindungsgemäßes Polyimid (B.3).

### I.4 Synthese von erfindungsgemäßem Polyimid (B.4)

In einem 2-I-Vierhalskolben mit Tropftrichter, Rückflusskühler, Innenthermometer und Teflon-Rührer legte man 100 g Anhydrid (b.1) (0,46 mol), gelöst in 300 g N-Methylpyrrolidon (NMP), vor und gab 0,05 g Wasser zu. Man erwärmte unter Rühren auf 80°C. Dann gab man bei 80°C über einen Zeitraum von einer Stunde tropfenweise 75,8 g (0,11 mol) Polyisocyanat (a.2) zu. Man rührte weitere vier Stunden bei 80°C. Dann gab man bei 80°C über einen Zeitraum von einer Stunde tropfenweise 38 g (0,11 mol) Polyisocyanat (a.1) zu. Man rührte weitere vier Stunden bei 80°C. Anschließend kühlte man auf Zimmertemperatur ab. Man erhielt erfindungsgemäßes Polyimid (B.41).
NCO: 7,92%

### I.5 Synthese von erfindungsgemäßem Polyimid (B.5)

In einem 2-I-Vierhalskolben mit Tropftrichter, Rückflusskühler, Innenthermometer und Teflon-Rührer legte man 100 g Anhydrid (b.1) (0,46 mol), gelöst in 300 g N-Methylpyrrolidon (NMP), vor und gab 0,1 g NaOCH₃ zu. Man erwärmte unter Rühren auf 80°C. Dann gab man bei 80°C über einen Zeitraum von einer Stunde tropfenweise 142,3 g (0,21 mol) Polyisocyanat (a.2) zu. Man rührte weitere zehn Stunden bei 80°C. Anschließend kühlte man auf Zimmertemperatur ab. Man erhielt erfindungsgemäßes Polyimid (B.5).

Von einem Aliquot bestimmte man den NCO-Gehalt zu 6,8%,

Dann gab man bei Zimmertemperatur über einen Zeitraum von einer Stunde tropfenweise 117 g Di-n-butylamin (c.1) zu und rührte weitere zwei Stunden.

Von einem Aliquot bestimmte man das Molekulargewicht:
Mₙ: 5820 g/mol, M_{w}: 57900 g/mol, M_{w}/Mₙ: 10.

### II. Herstellung von erfindungsgemäßen Werkstoffen

### Eingesetzte Materialien:

Kautschuk (A.1): Recycling-Gummigranulat der Fa. Alfredo Mesalles, S.A. (Gavä, Barcelona, Spanien), Partikeldurchmesser im Bereich von 1 bis 4 mm.

Polyurethan (C.1): Isocyanat-terminiertes Präpolymer aus 18 Gew.-% 4,4'-MDI, 13 Gew.-% 2,4'-MDI, 1 Gew.-% 2,2'-MDI und 68 Gew.-% eines Polyetherdiols (EO/PO) mit einem Molekulargewicht M_{w} von 4000 g/mol und einer OH-Zahl von 56 mg KOH/g NCO-Gehalt des Präpolymers von 8 Gew.-%.

Zusatz (D.1): Mischung aus einem Polypropylenoxid mit einem Molekulargewicht M_{w} von 2000 g/mol und wässriger Phosphorsäure (85 Gew.-%) im Gew.-Verhältnis 95:5 (Vergleich).

Komponente A2: Mischung aus Polyurethan (C.1) und erfindungsgemäßem Polyimid (B.1) im Gew.-Verhältnis 80:20.

### II.1 Herstellung von Prüfplatten V-PP.1 (Einschrittverfahren, Vergleich)

In einem Behälter aus Polypropylen wurde eine Mischung aus Kautschuk (A.1) mit einer Korngröße von 1 bis 4 mm mit der in Tabelle 1 angegebenen Menge Polyurethan (C.1) mit einem Vollrath-Rührer (Rührerdurchmesser: 8,5 cm, Rührgeschwindigkeit: 750 Umdrehungen/min., Rührdauer: 2 Minuten) vermischt, bis die Kautschukpartikel gleichmäßig benetzt waren, wie durch optische Inspektion ermittelt wurde. Anschließend wurde die Mischung in einen Holzrahmen der Maße 20 cm x 20 cm x 1,5 cm (jeweils Innenabmessungen) gefüllt. Man erhielt Prüfplatten V-PP.1, die 7 Tage lang bei Raumtemperatur und 50 % relativer Luftfeuchte ausgehärtet und anschließend vermessen wurden.

### II.2 Erfindungsgemäße Herstellung von Prüfplatten PP.2 (Einschrittverfahren)

In einem Behälter aus Polypropylen wurde eine Mischung aus Kautschuk (A.1) mit der in Tabelle 1 angegebenen Menge der Komponente A2 mit einem Vollrath-Rührer (Rührerdurchmesser: 8,5 cm, Rührgeschwindigkeit: 750 Umdrehungen/min., Rührdauer: 2 Minuten) vermischt, bis die Kautschukpartikel gleichmäßig benetzt waren, wie durch optische Inspektion ermittelt wurde. Anschließend wurde die so erhaltene Mischung in einen Holzrahmen der Maße 20 cm x 20 cm x 1,5 cm (jeweils Innenabmessungen) gefüllt. Man erhielt erfindungsgemäße Prüfplatten PP.2, die 7 Tage lang bei Raumtemperatur und 50 % relativer Luftfeuchte ausgehärtet und anschließend vermessen wurden.

### II.3 Herstellung von Prüfplatten P.3 (Zweischrittverfahren, Vergleich)

In einem Behälter aus Polypropylen wurde eine Mischung aus Kautschuk (A.1) mit der in Tabelle 1 angegebenen Menge von Zusatz (D.1) mit einem Vollrath-Rührer (Rührerdurchmesser: 8,5 cm, Rührgeschwindigkeit: 750 Umdrehungen/min., Rührdauer: 2 Minuten) vermischt, bis die Kautschukpartikel gleichmäßig benetzt waren. Danach erfolgte die Zugabe von Polyurethan (C.1). Man vermischte, bis eine gleichmäßige Belegung der Kautschukpartikel mit Polyurethan (A.1) erzielt war, wie durch optische Inspektion ermittelt wurde. Anschließend wurde die Mischung in einen Holzrahmen der Maße 20 cm x 20 cm x 1,5 cm (jeweils Innenabmessungen) gefüllt. Man erhielt Prüfplatten V-PP.3, die 7 Tage lang bei Raumtemperatur und 50 % relativer Luftfeuchte ausgehärtet und anschließend vermessen wurden.

### II.4 Erfindungsgemäße Herstellung von Prüfplatten (Zweischrittverfahren)

In einem Behälter aus Polypropylen wurde eine Mischung aus Kautschuk (A.1) mit der in Tabelle 1 angegebenen Menge von Zusatz (D.1) mit einem Vollrath-Rührer (Rührer-durchmesser: 8,5 cm, Rührgeschwindigkeit: 750 Umdrehungen/min., Rührdauer: 2 Minuten) vermischt, bis die Kautschukpartikel gleichmäßig benetzt waren. Danach er-folgte die Zugabe der Komponente A2, und erneut wurde vermischt, bis eine gleichmäßige Belegung der Kautschukpartikel mit Komponente A2, erzielt war, wie durch optische Inspektion ermittelt wurde. Anschließend wurde die so erhaltene Mischung in einen Holzrahmen der Maße 20 cm x 20 cm x 1,5 cm (jeweils Innenabmessungen) gefüllt. Man erhielt erfindungsgemäße Prüfplatten PP.4, die 7 Tage lang bei Raumtemperatur und 50 % relativer Luftfeuchte ausgehärtet und anschließend vermessen wurden.

### Prüfmethoden

Zug-/Dehnungsmessungen: Die Bestimmung der Zugfestigkeit und Reißdehnung erfolgte in Anlehnung an DIN EN ISO 1798 mit Schulterstäben einer Stegbreite von 25 mm und einer Zuggeschwindigkeit von 100 mm/Min.

### Ergebnisse

**Tabelle 1: Herstellung von Prüfplatten**

| Nr. | Kautschuk [Gew.-TI.] | (D.1) [Gew.-TI.] | (C.1) | (C.1) und (B) | | Zugfestigkeit [kPa] | Dehnung [%] |
|---|---|---|---|---|---|---|---|
| | | | [Gew.-TI.] | | | | |
| | | | 1. Schritt | 2. Schritt | | | |
| | (A.1) | | (C.1) | (C.1) und (B.1) 4:1 | (C.1) und (B.2) 4:1 | | |
| V-PP.1 | 100 | - | 20 | - | | 136 ± 10 | 22 ± 5 |
| PP.2 | 100 | - | 16 | - | 4 | 266 ± 10 | 25 ± 5 |
| V-PP.3 | 100 | 1 | 19 | - | | 226 ± 10 | 41 ± 5 |
| PP.4 | 100 | 1 | 15,2 | 3,8 | - | 277 ± 10 | 38 ± 5 |

## Patentansprüche

1. Werkstoff, enthaltend
(A) mindestens einen Kautschuk,
(B) mindestens ein Polyimid, gewählt aus verzweigten Kondensationsprodukten von
(a) mindestens einem Polyisocyanat mit im Mittel mehr als zwei Isocyanatgruppen pro Molekül und
(b) mindestens einer Polycarbonsäure mit mindestens 3 COOH-Gruppen pro Molekül oder ihrem Anhydrid.

2. Werkstoff nach Anspruch 1, **dadurch gekennzeichnet, dass** man Polyimid (B) wählt aus solchen Polyimiden, die ein Molekulargewicht M_{w} von mindestens 1.000 g/mol aufweisen.

3. Werkstoff nach Anspruch 1 oder 2, **dadurch gekennzeichnet, dass** man als Polycarbonsäure (b) eine Polycarbonsäure mit mindestens 4 COOH-Gruppen pro Molekül oder das betreffende Anhydrid wählt.

4. Werkstoff nach einem der Ansprüche 1 bis 3, **dadurch gekennzeichnet, dass** man Polyisocyanat (a) wählt aus oligomerem Hexamethylendiisocyanat, oligomerem Tetramethylendiisocyanat, oligomerem Isophorondiisocyanat, oligomerem Diphenylmethandiisocyanat, trimerem Toluylendiisocyanat und Mischungen der vorstehend genannten Polyisocyanate.

5. Werkstoff nach einem der Ansprüche 1 bis 4, **dadurch gekennzeichnet, dass** er weiterhin
(C) mindestens ein Polyurethan enthält.

6. Werkstoff nach Anspruch 5, **dadurch gekennzeichnet, dass** man Polyurethan (C) wählt aus aromatischen Polyurethanen.

7. Werkstoff nach einem der Ansprüche 1 bis 6, **dadurch gekennzeichnet, dass** man Kautschuk (A) wählt aus Butadien-Kautschuk (BR), Styrol-Butadien-Kautschuk (SBR), Isopren-Kautschuk (IR), Styrol-Isoprenbutadien-Kautschuk (SIBR), Acrylnitrilbutadien-Kautschuk (NBR), Chloropren-Kautschuk (CR), Isobuten-Isopren-Kautschuk (IIR), Ethylen-Propylen-Dien-Kautschuk (EPDM) und Naturkautschuk (NR) oder Mischungen von mindestens zwei der vorstehend genannten Kautschuken.

8. Werkstoff nach einem der Ansprüche 1 bis 7, **dadurch gekennzeichnet, dass** Polyimid (B) eine Polydispersität M_{w}/Mₙ von mindestens 1,4 aufweist.

9. Werkstoff nach einem der Ansprüche 1 bis 8, **dadurch gekennzeichnet, dass** er weiterhin mindestens einen Zusatz (D) enthält, der mindestens eine Säure und mindestens eine Verbindung mit zwei funktionellen Gruppen, die mit Isocyanat reagieren kann, umfasst.

10. Verfahren zur Herstellung von Werkstoffen nach einem der Ansprüche 1 bis 9, **dadurch gekennzeichnet, dass** man
(A) mindestens einen Kautschuk
(B) mindestens ein Polyimid, gewählt aus verzweigten Kondensationsprodukten von
(a) mindestens einem Polyisocyanat mit im Mittel mehr als zwei Isocyanatgruppen pro Molekül und
(b) mindestens einer Polycarbonsäure mit mindestens 3 COOH-Gruppen pro Molekül oder ihrem Anhydrid, und
(C) gegebenenfalls mindestens ein Polyurethan
miteinander vermischt.

11. Verfahren nach Anspruch 10, **dadurch gekennzeichnet, dass** Polyimid (B) eine Polydispersität M_{w}/Mₙ von mindestens 1,4 aufweist.

12. Polyimide mit einer Polydispersität M_{w}/Mₙ von mindestens 1,4, gewählt aus verzweigten Kondensationsprodukten von
(a) mindestens einem Polyisocyanat mit mehr als zwei Isocyanatgruppen pro Molekül und
(b) mindestens einer Polycarbonsäure mit mindestens 3 COOH-Gruppen pro Molekül oder ihrem Anhydrid.

13. Polyimide nach Anspruch 12, **dadurch gekennzeichnet, dass** man Polyisocyanat (a) wählt aus oligomerem Hexamethylendiisocyanat, oligomerem Tetramethylen-diisocyanat, oligomerem Isophorondiisocyanat, oligomerem Diphenylmethandiisocyanat, trimerem Toluylendiisocyanat und Mischungen der vorstehend genannten Polyisocyanate.

14. Polyimide nach Anspruch 12 oder 13, **dadurch gekennzeichnet, dass** man als Polycarbonsäure (b) eine Polycarbonsäure mit mindestens 4 COOH-Gruppen pro Molekül oder das betreffende Anhydrid wählt.

15. Verfahren zur Herstellung von Polyimiden nach einem der Ansprüche 12 bis 14, **dadurch gekennzeichnet, dass** man
(a) mindestens ein Polyisocyanat mit im Mittel mehr als zwei Isocyanatgruppen pro Molekül und
(b) mindestens eine Polycarbonsäure mit mindestens 3 COOH-Gruppen pro Molekül oder ihr Anhydrid
in Gegenwart eines Katalysators miteinander umsetzt.

16. Verfahren nach Anspruch 15, **dadurch gekennzeichnet, dass** man den Katalysator wählt aus Wasser oder Brønsted-Basen.

## Claims

1. A material comprising
(A) at least one rubber,
(B) at least one polyimide selected from branched condensation products of
(a) at least one polyisocyanate having on average more than two isocyanate groups per molecule, and
(b) at least one polycarboxylic acid having at least 3 COOH groups per molecule or anhydride thereof.

2. The material according to claim 1, wherein polyimide (B) is selected from those polyimides that have a molecular weight M_{w} of at least 1000 g/mol.

3. The material according to claim 1 or 2, wherein, as polycarboxylic acid (b), a polycarboxylic acid having at least 4 COOH groups per molecule, or the relevant anhydride, is selected.

4. The material according to any one of claims 1 to 3, wherein polyisocyanate (a) is selected from oligomeric hexamethylene diisocyanate, oligomeric tetramethylene diisocyanate, oligomeric isophorone diisocyanate, oligomeric diphenylmethane diisocyanate, trimeric tolylene diisocyanate and mixtures of the abovementioned polyisocyanates.

5. The material according to any one of claims 1 to 4, wherein it in addition comprises
(C) at least one polyurethane.

6. The material according to claim 5, wherein polyurethane (C) is selected from aromatic polyurethanes.

7. The material according to any one of claims 1 to 6, wherein rubber (A) is selected from butadiene rubber (BR), styrene butadiene rubber (SBR), isoprene rubber (IR), styrene isoprene butadiene rubber (SIBR), acrylonitrile butadiene rubber (NBR), chloroprene rubber (CR), isobutene isoprene rubber (IIR), ethylene propylene diene rubber (EPDM) and natural rubber (NR) or mixtures of at least two of the abovementioned rubbers.

8. The material according to any one of claims 1 to 7, wherein polyimide (B) has a polydispersity M_{w}/Mₙ of at least 1.4.

9. The material according to any one of claims 1 to 8, wherein it additionally comprises at least one additive (D) which comprises at least one acid and at least one compound having two functional groups that can react with isocyanate.

10. A method for producing materials according to any one of claims 1 to 9, which comprises, mixing with one another
(A) at least one rubber,
(B) at least one polyimide selected from branched condensation products of
(a) at least one polyisocyanate having on average more than two isocyanate groups per molecule, and
(b) at least one polycarboxylic acid having at least 3 COOH groups per molecule or anhydride thereof, and
(C) optionally at least one polyurethane.

11. The method according to claim 10, wherein polyimide (B) has a polydispersity M_{w}/Mₙ of at least 1.4.

12. A polyimide having a polydispersity M_{w}/Mₙ of at least 1.4, selected from branched condensation products of
(a) at least one polyisocyanate having more than two isocyanate groups per molecule and
(b) at least one polycarboxylic acid having at least 3 COOH groups per molecule or anhydride thereof.

13. The polyimide according to claim 12, wherein polyisocyanate (a) is selected from oligomeric hexamethylene diisocyanate, oligomeric tetramethylene diisocyanate, oligomeric isophorone diisocyanate, oligomeric diphenylmethane diisocyanate, trimeric tolylene diisocyanate and mixtures of the abovementioned polyisocyanates.

14. The polyimide according to claim 12 or 13, wherein, as polycarboxylic acid (b), a polycarboxylic acid having at least 4 COOH groups per molecule, or the relevant anhydride, is selected.

15. A method for producing polyimides according to any one of claims 12 to 14, which comprises reacting with one another
(a) at least one polyisocyanate having on average more than two isocyanate groups per molecule, and
(b) at least one polycarboxylic acid having at least 3 COOH groups per molecule or anhydride thereof
in the presence of a catalyst.

16. The method according to claim 15, wherein the catalyst is selected from water or Brønsted bases.

## Revendications

1. Matériau, contenant
(A) au moins un caoutchouc,
(B) au moins un polyimide, choisi parmi les produits de condensation ramifiés de
(a) au moins un polyisocyanate contenant en moyenne plus de deux groupes isocyanate par molécule et
(b) au mois un acide polycarboxylique présentant au moins 3 groupes COOH par molécule ou son anhydride.

2. Matériau selon la revendication 1, **caractérisé en ce qu'**on choisit le polyimide (B) parmi les polyimides qui présentent un poids moléculaire M_{w} d'au moins 1000 g/mole.

3. Matériau selon la revendication 1 ou 2, **caractérisé en ce qu'**on choisit, comme acide polycarboxylique (b) un acide polycarboxylique présentant au moins 4 groupes COOH par molécule ou l'anhydride correspondant.

4. Matériau selon l'une quelconque des revendications 1 à 3, **caractérisé en ce qu'**on choisit le polyisocyanate (a) parmi l'hexaméthylènediisocyanate oligomère, le tétraméthylènediisocyanate oligomère, l'isophoronediisocyanate oligomère, le diphénylméthanediisocyanate oligomère, le toluylènediisocyanate oligomère et les mélanges des polyisocyanates susmentionnés.

5. Matériau selon l'une quelconque des revendications 1 à 4, **caractérisé en ce qu'**il contient en outre (C) au moins un polyuréthane.

6. Matériau selon la revendication 5, **caractérisé en ce qu'**on choisit le polyuréthane (C) parmi les polyuréthanes aromatiques.

7. Matériau selon l'une quelconque des revendications 1 à 6, **caractérisé en ce qu'**on choisit le caoutchouc (A) parmi le caoutchouc de butadiène (BR), le caoutchouc de styrène-butadiène (SBR), le caoutchouc d'isoprène (IR), le caoutchouc de styrène-isoprène-butadiène (SIBR), le caoutchouc d'acrylonitrile-butadiène (NBR), le caoutchouc de chloroprène (CR), le caoutchouc d'isobutène-isoprène (IIR), le caoutchouc d'éthylène-propylène-diène (EPDM) et le caoutchouc naturel (NR) ou des mélanges d'au moins deux des caoutchoucs susmentionnés.

8. Matériau selon l'une quelconque des revendications 1 à 7, **caractérisé en ce que** le polyimide (B) présente une polydispersité M_{w}/Mₙ d'au moins 1,4.

9. Matériau selon l'une quelconque des revendications 1 à 8, **caractérisé en ce qu'**il contient en outre au moins un additif (D) qui comprend au moins un acide et au moins un composé présentant deux groupes fonctionnels qui peut réagir avec de l'isocyanate.

10. Procédé pour la préparation de matériaux selon l'une quelconque des revendications 1 à 9, **caractérisé en ce qu'**on mélange, les uns avec les autres
(A) au moins un caoutchouc,
(B) au moins un polyimide, choisi parmi les produits de condensation ramifiés de
(a) au moins un polyisocyanate contenant en moyenne plus de deux groupes isocyanate par molécule et
(b) au mois un acide polycarboxylique présentant au moins 3 groupes COOH par molécule ou son anhydride, et
(C) le cas échéant au moins un polyuréthane.

11. Procédé selon la revendication 10, **caractérisé en ce que** le polyimide (B) présente une polydispersité M_{w}/Mₙ d'au moins 1,4.

12. Polyimides présentant une polydispersité M_{w}/Mₙ d'au moins 1,4, choisis parmi les produits de condensation ramifiés de
(a) au moins un polyisocyanate contenant plus de deux groupes isocyanate par molécule et
(b) au mois un acide polycarboxylique présentant au moins 3 groupes COOH par molécule ou son anhydride.

13. Polyimides selon la revendication 12, **caractérisés en ce qu'**on choisit le polyisocyanate (a) parmi l'hexaméthylènediisocyanate oligomère, le tétraméthylènediisocyanate oligomère, l'isophoronediisocyanate oligomère, le diphénylméthanediisocyanate oligomère, le toluylènediisocyanate oligomère et les mélanges des polyisocyanates susmentionnés.

14. Polyimides selon la revendication 12 ou 13, **caractérisés en ce qu'**on choisit, comme acide polycarboxylique (b) un acide polycarboxylique présentant au moins 4 groupes COOH par molécule ou l'anhydride correspondant.

15. Procédé pour la préparation de polyimides selon l'une quelconque des revendications 12 à 14, **caractérisé en ce qu'**on transforme l'un avec l'autre
(a) au moins un polyisocyanate contenant en moyenne plus de deux groupes isocyanate par molécule et
(b) au mois un acide polycarboxylique présentant au moins 3 groupes COOH par molécule ou son anhydride
en présence d'un catalyseur.

16. Procédé selon la revendication 15, **caractérisé en ce qu'**on choisit le catalyseur parmi l'eau ou les bases de Brönstedt.
